# EUROPÄISCHE PATENTSCHRIFT

(11) **EP 3 122 538 B1**
(45) Veröffentlichungstag und Bekanntmachung des Hinweises auf die Patenterteilung: **29.04.2020**
(21) Anmeldenummer: 15712902.4
(22) Anmeldetag: 27.03.2015
(51) Int. Cl.: B29C 64/371, B29C 64/153

(54) **VORRICHTUNG UND VERFAHREN ZUM SCHICHTWEISEN HERSTELLEN EINES DREIDIMENSIONALEN OBJEKTS SOWIE DÜSENELEMENT ZUM EINLEITEN EINES GASSTROMS IN DIE VORRICHTUNG**
DEVICE AND METHOD FOR PRODUCING A THREE-DIMENSIONAL OBJECT LAYER BY LAYER AND NOZZLE FOR GASFLOW INTO THE DEVICE
SYSTÈME ET PROCÉDÉ DE FABRICATION PAR COUCHES D'UN OBJET TRIDIMENSIONNEL ET BUSE POUR INDUCTION DE GAS DANS LE SYSTÈME

(30) Priorität: 28.03.2014 DE 102014205875
(43) Veröffentlichungstag der Anmeldung: 01.02.2017
(73) Patentinhaber: EOS GmbH Electro Optical Systems, 82152 Krailling (DE)
(72) Erfinder: NYRHILÄ, Olli, FI-21620 Kuusisto (FI); SCHILLING, Alexander, 81377 München (DE); HAMANN, Jörg, 85053 Ingolstadt (DE); DOMRÖSE, Robert Achim, 82110 Germering (DE); WOLF, Dominik, 81243 München (DE); SYVÄNEN, Tatu, FI-21540 Preitilä (FI); MINET, Kevin, FI-20540 Turku (FI)
(74) Vertreter: Prüfer & Partner mbB Patentanwälte · Rechtsanwälte
(86) Internationale Anmeldenummer: PCT/EP2015/056722
(87) Internationale Veröffentlichungsnummer: WO 2015/144884

(56) Entgegenhaltungen:
- EP-A1- 1 514 622
- EP-A1- 2 492 084
- EP-A1- 2 647 942
- WO-A1-03/086617
- WO-A1-2007/112808
- DE-A1- 4 308 842
- US-A- 5 981 897

## Beschreibung

Die vorliegende Erfindung bezieht sich auf eine Vorrichtung und ein Verfahren zum schichtweisen Herstellen eines dreidimensionalen Objekts durch schichtweises Verfestigen von Aufbaumaterial an den dem Querschnitt des herzustellenden Objektes in der jeweiligen Schicht entsprechenden Stellen.

Zu den Verfahren zum schichtweisen Herstellen eines dreidimensionalen Objekts zählt beispielsweise das selektives Lasersintern oder -schmelzen. Dabei wird schichtweise ein pulverförmiges Aufbaumaterial aufgetragen und durch Laserstrahlung selektiv verfestigt.

DE 196 49 865 C1 beschreibt ein Verfahren zur Herstellung eines Formkörpers durch schichtweises Auftragen und selektives Verfestigen eines metallischen Werkstoffpulvers in einer Prozesskammer. Auf der einen Seite der Prozesskammer ist ein Schutzgaseinlass angeordnet, auf der anderen Seite ein Schutzgasauslass. Durch diese wird eine laminare Schutzgasströmung über dem aufgetragenen Pulver erzeugt, um eine Oxidation der Oberfläche der Materialien zu vermeiden.

DE 198 53 947 C1 beschreibt eine Prozesskammer für das selektive Laserschmelzen, in deren Seitenwänden Einlass- und Auslassöffnungen für ein Schutzgas angeordnet sind, das die Prozesskammer durchströmt.

In beiden Fällen erfolgt der schichtweise Auftrag des Pulvers durch einen Schieber aus einem bezüglich der Schutzgasströmung stromaufwärts gelegenen Pulvervorrat. Der Pulvervorrat und die Arbeitsfläche zum Aufbau des Objekts liegen nebeneinander, und dementsprechend ist die Prozesskammer flach und lang. Die Schutzgasströmung hat mehr als die Hälfte der Prozesskammer zu durchströmen, bevor sie die aufgetragene Pulverschicht erreicht, wodurch es leicht zu erreichen ist, dass die Schutzgasströmung über der aufgetragenen Pulverschicht laminar ist.
WO 2007/112808 A1 beschreibt eine Lasersintervorrichtung mit einer ersten Einlassöffnung für ein Gas, die an einer Seite eines optischen Elements angeordnet ist und so ausgebildet ist, dass ein austretender erster Gasstrom im wesentlichen tangential an der Oberfläche des optischen Elements entlang streicht.

Bei Vorrichtungen zum schichtweisen Herstellen eines dreidimensionalen Objekts, bei denen das Aufbringen einer Pulverschicht anders durchgeführt wird, beispielsweise aus einem oberhalb der Arbeitsfläche angeordneten Pulvervorrat, steht kein so langer Anlaufweg für eine Gasströmung zur Verfügung. Der Gasstrom überstreicht dabei im Wesentlichen nur die Arbeitsfläche, auf der das Objekt aufgebaut wird. Dabei ist es schwieriger, zu erreichen, dass der Gasstrom über der gesamten aufgetragenen Pulverschicht laminar ist.

Bei einer der Anmelderin intern bekannten Vorrichtung wird ein Gas über einen Kanal zu einer Seitenwand der Prozesskammer geführt und durch ein Lochblech, das ein Mehrzahl nebeneinanderliegender Löcher enthält, in die Prozesskammer eingeleitet. Auf der anderen Seite wird das Gas wieder abgesaugt. Leitbleche stromaufwärts des Lochblechs können dabei die Laminarität des Gasstroms verbessern helfen. Dennoch weist ein so erzeugter Gasstrom Unregelmäßigkeiten und Verwirbelungen auf.

Durch das Einbringen von Energie auf das zu verfestigende Pulver können Spratzer, Rauch, Gase und/oder Dämpfe an der Pulveroberfläche entstehen, die eine Absorption oder Brechung des Laserstrahls bewirken. Die daraus resultierenden lokalen Belichtungsfehler können sich negativ auf die Qualität des herzustellenden Objekts auswirken.

Die bei der der Anmelderin intern bekannten Vorrichtung auftretenden Unregelmäßigkeiten und Verwirbelungen führen zu einem inhomogenen Abtransport von Rauch, Gasen und/oder Dämpfen, die an der Pulveroberfläche gebildet werden. Durch die daraus resultierenden Belichtungsfehler und durch im Schutzgasstrom auftretende Turbulenzen, die das zu verfestigende Pulver aufwirbeln können, kann die Qualität des herzustellenden Objekts beeinträchtigt werden.

Die Aufgabe der vorliegenden Erfindung besteht darin, eine Vorrichtung und ein Verfahren zum schichtweisen Herstellen eines dreidimensionalen Objekts durch schichtweises Aufbringen und selektives Verfestigen eines Aufbaumaterials bereitzustellen, bei denen die Laminarität eines über eine aufgebrachte Schicht des Aufbaumaterials geführten Gasstroms verbessert ist.

Die Aufgabe wird gelöst durch eine Vorrichtung gemäß Anspruch 1, ein Verfahren gemäß Anspruch 9 und eine Verwendung eines Düsenelements gemäß Anspruch 10. Weiterbildungen der Erfindung sind jeweils in den Unteransprüchen angegeben. Dabei kann das Verfahren auch durch die untenstehenden bzw. in den Unteransprüchen ausgeführten Merkmale der Vorrichtung weitergebildet sein oder umgekehrt.

Dadurch, dass zum Erzeugen einer laminaren Strömung das in diesen Ansprüchen angegebene Düsenelement verwendet wird, wird die Laminarität eines über eine aufgebrachte Schicht des Aufbaumaterials geführten Gasstroms und dadurch die Qualität des hergestellten Objekts verbessert. Außerdem kann es mithilfe des Düsenelements ermöglicht werden, eine laminare Strömung des Gasstroms innerhalb eines Bauraums mit relativ geringen Abmessungen, insbesondere Abmessungen entlang der zu erzielenden laminaren Strömungsrichtung des Gasstroms, zu realisieren. Vorzugsweise nimmt die horizontale Breite der Kanäle von der Gaseintrittsseite des Düsenelements aus zu der Gasaustrittsseite hin allmählich zu. Die dadurch bewirkte Auffächerung des Luftstroms führt dazu, dass derselbe Arbeitsbereich mit einem schmaleren Düsenelement überstrichen werden kann. Vorzugsweise enthält das Düsenelement einen schräg nach unten gerichteten Steg oberhalb der Kanäle der unteren Reihe oder Reihen. Das dadurch bewirkte Abwärtsrichten des aus den unteren Austrittsöffnungen austretenden Luftstroms führt weiter dazu, eine auf der Gasaustrittsseite des Düsenelements entstehende Verwirbelung des Gasstroms auf einen wesentlich kleineren Bereich zu begrenzen und schon in einem wesentlich kürzeren Abstand von dem Düsenelement eine laminare Strömung zu erzielen.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum schichtweisen Herstellen eines dreidimensionalen Objekts gemäß der vorliegenden Erfindung.
- Fig. 2: ist eine perspektivische Ansicht eines in der in Fig. 1 gezeigten Vorrichtung als Gaseinlassdüse verwendeten Düsenelements gemäß einer ersten Ausführungsform der vorliegenden Erfindung.
- Fig. 3: ist eine Seitenansicht auf eine Gasaustrittsseite des in Fig. 2 gezeigten Düsenelements.
- Fig. 4: ist eine Schnittansicht des in Fig. 2 und 3 gezeigten Düsenelements entlang einer in Fig. 3 gezeigten Linie B-B.
- Fig. 5: ist eine Schnittansicht des in Fig. 2 bis 4 gezeigten Düsenelements entlang einer in Fig. 3 gezeigten Linie E-E.
- Fig. 6: ist eine perspektivische Ansicht, die Simulationsergebnisse einer Gasströmung bei Verwendung eines Lochblechs als Gaseintrittsdüse gemäß einem Vergleichsbeispiel zeigt.
- Fig. 7: ist eine perspektivische Ansicht, die Simulationsergebnisse einer Gasströmung bei Verwendung des in Fig. 2 bis 5 gezeigten Düsenelements als Gaseintrittsdüse zeigt.
- Fig. 8: ist eine perspektivische Ansicht eines in der in Fig. 1 gezeigten Vorrichtung als Gaseinlassdüse verwendeten Düsenelements gemäß einer zweiten Ausführungsform der vorliegenden Erfindung.
- Fig. 9: ist eine Schnittansicht des in Fig. 8 gezeigten Düsenelements in dessen Mittelebene.

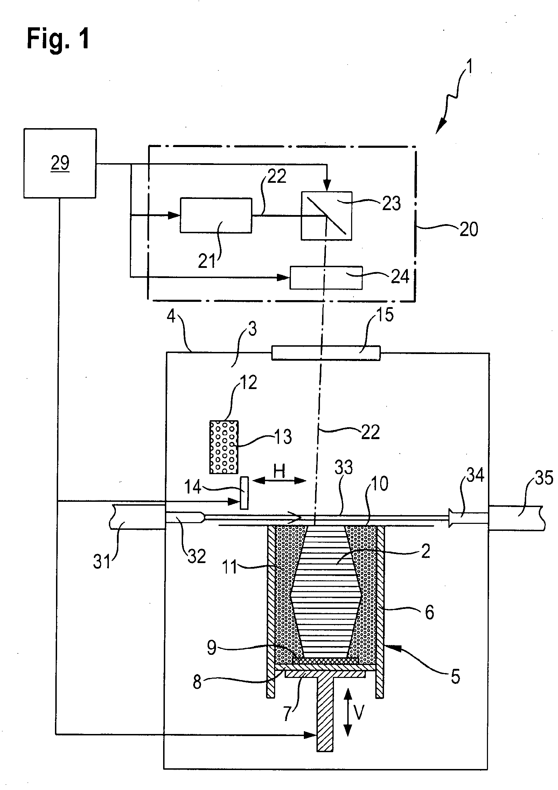

Im Folgenden wird mit Bezug auf Fig. 1 bis 5 ein Ausführungsbeispiel einer Vorrichtung gemäß einer ersten Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer Arbeitsebene 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbarer Beschichter 14 zum Aufbringen des Aufbaumaterials 13 auf die Arbeitsebene 10. An ihrer Oberseite enthält die Wandung 4 der Prozesskammer 3 ein Einkoppelfenster 15 für die zum Verfestigen des Pulvers 13 dienende Strahlung.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über das Einkoppelfenster 15 auf die Arbeitsebene 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird.

Zum Erzeugen eines laminaren Gasstroms 33 oberhalb der Arbeitsebene 10 enthält die Lasersintervorrichtung 1 ferner einen Gaszuführkanal 31, eine Gaseinlassdüse 32, eine Gasauslassdüse 34 und einen Gasabführkanal 35. Auch die Gaszufuhr und -abfuhr kann von der Steuereinheit 29 gesteuert sein.

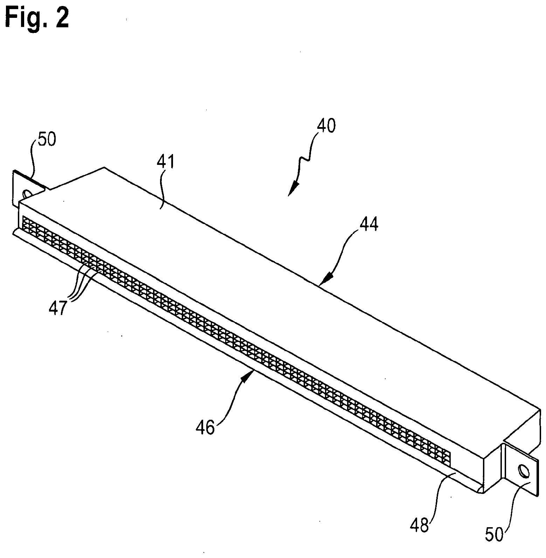

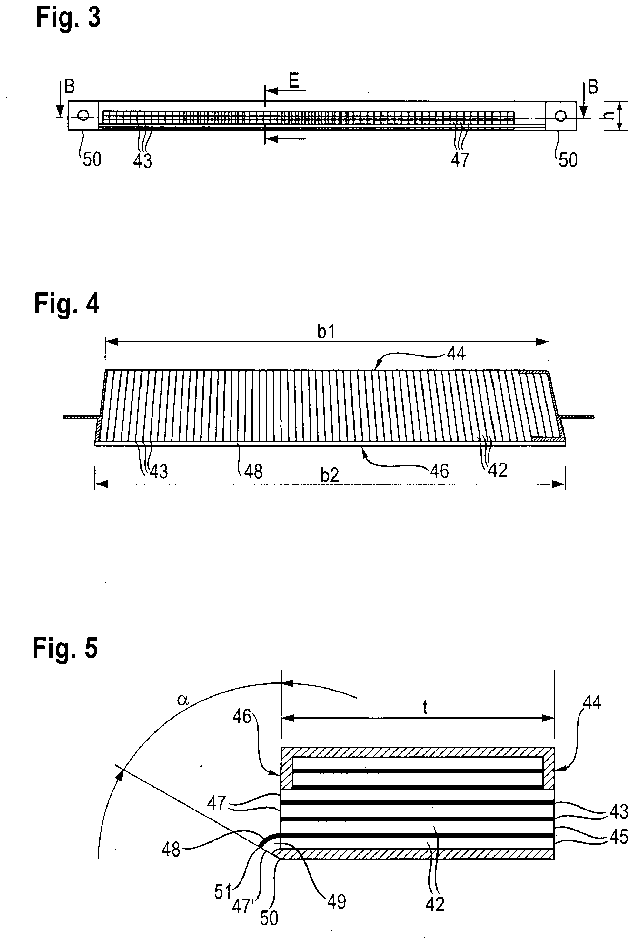

Als Gaseinlassdüse 32 ist ein Düsenelement 40 vorgesehen, das in Fig. 2 in perspektivischer Ansicht dargestellt ist. Fig. 3 zeigt eine Seitenansicht auf eine Gasaustrittsseite 46 des Düsenelements 40, und Fig. 4 und 5 zeigen jeweils Schnittansichten des Düsenelements 40.

Das Düsenelement 40 umfasst einen Körper 41 aus einem festen Material, durch den hindurch neben- und übereinander liegende Kanäle 42 verlaufen, die durch Wände 43 voneinander getrennt sind. Auf der Gaseintrittsseite 44 des Düsenelements 40 enden die Kanäle 42 in Eintrittsöffnungen 45, auf der Gasaustrittsseite 46 in Austrittsöffnungen 47. Als Kanal wird in der vorliegenden Anmeldung ein Weg für einen Gasstrom bezeichnet, der bevorzugt im Wesentlichen über seine ganze Länge zwischen seiner Eintrittsöffnung und seiner Austrittsöffnung allseitig von einer geschlossenen Wand umgeben ist, so dass im Wesentlichen kein Übertritt von Gas aus einem Kanal in einen benachbarten Kanal erfolgen kann.

Gemäß der vorliegenden Ausführungsform ist der Körper 41 annähernd quaderförmig gebildet mit einer Höhe h und einer Tiefe t. Wie am besten aus Fig. 4 ersichtlich, ist der Grundriss jedoch leicht trapezförmig, so dass die Breite b1 auf der Gaseintrittsseite 44 kleiner ist als die Breite b2 auf der Gasaustrittsseite 46. Entsprechend erweitert sich auch der Querschnitt der einzelnen Kanäle 42 in der Horizontalen von der Gaseintrittsseite 44 zu der Gasaustrittsseite 46 hin. Die Breite b2 auf der Gasaustrittsseite 46 ist so bemessen, dass der erzeugte Gasstrom 33 das gesamte Baufeld, d. h. die Arbeitsebene 10, überstreichen kann.

In der vorliegenden Ausführungsform haben die Kanäle 42 jeweils einen rechteckigen Querschnitt, bei dem die Breite der einzelnen Kanäle größer als ihre Höhe ist, und sind in Form einer Matrix in Reihen und Spalten neben- und übereinander angeordnet. Die zwischen ihnen liegenden Wände 43 bilden in der in Fig. 3 gezeigten Seitenansicht (und in jedem parallel zu der Zeichnungsebene in Fig. 3 liegenden Schnitt) ein Gitter aus horizontalen und vertikalen Linien. Die Gesamtquerschnittsfläche aller dieser Wände 43 in der Seitenansicht (oder einer entsprechenden Schnittansicht) ist wesentlich kleiner als die Gesamtquerschnittsfläche aller Kanäle 42.

Die Tiefe t des Körpers 41 und damit die Länge der Kanäle 42 ist so gewählt, dass sich in ihnen eine laminare Strömung ausbildet und der Gasaustritt auf der Gasaustrittsseite 46 laminar erfolgt. Der Begriff "laminar" wird in dieser Anmeldung für einen Gasstrom 33 verwendet, der entweder vollständig laminar ist oder zumindest im Wesentlichen laminar, so dass er nur in so geringem Maße Verwirbelungen enthält, dass sie den Abtransport von Rauch, Gasen und/oder Dämpfen nicht behindern und die aufgebrachte Pulverschicht nicht aufwirbeln oder anderweitig bewegen.

Vorzugsweise ist die Kanallänge größer gewählt als die größte Abmessung der Austrittsöffnungen 47. Bei dem in der vorliegenden Ausführungform verwendeten Rechteckquerschnitt ist die größte Abmessung der Austrittsöffnungen 47 die Diagonale des Rechtecks. Vorzugsweise ist die Kanallänge mindestens fünfmal so groß wie die größte Abmessung der Austrittsöffnungen, in weiter bevorzugter Weise mindestens zehnmal so groß.

Wie am besten aus Fig. 5 ersichtlich enthält das Düsenelement 40 ferner oberhalb der untersten Reihe von Austrittsöffnungen 47 einen Steg 48, der von der Gasaustrittsseite 44 des Körpers 41 aus herausragt und in Richtung der Arbeitsebene 10 geneigt ist und sich hier über die gesamte Breite b2 der Gasaustrittsseite 44 des Körpers 41 erstreckt. Die Dicke des Stegs 48 entspricht in etwa der Dicke der Wand zwischen der untersten und der zweituntersten Reihe von Austrittsöffnungen. Der Steg 48 kann in seinem Querschnitt gerade oder leicht nach unten gebogen gebildet sein. Ferner sind die Wände zwischen benachbarten Kanälen 42 der untersten Reihe jeweils durch einen Vorsprung 49 so verlängert, dass der untere Rand 50 der Austrittsöffnungen 47 mit dem unteren Rand 51 des Stegs 48 verbunden ist. Somit ergeben sich für die untere Reihe schrägliegende Austrittsöffnungen 47', die gegenüber den anderen Austrittsöffnungen 47 um einen Winkel α nach unten geneigt sind und den Luftstrom somit leicht nach unten ablenken. Vorzugsweise ist dieser Winkel α größer gleich 45°, in weiter bevorzugter Weise größer gleich 55°. Unabhängig davon ist dieser Winkel α vorzugsweise kleiner gleich 75°, in weiter bevorzugter Weise kleiner gleich 65°. In noch weiter bevorzugter Weise beträgt er etwa 60°.

Schließlich enthält das Düsenelement 40 auf beiden Seiten je eine Befestigungslasche 50 zur Befestigung an einer (nicht gezeigten) Haltevorrichtung oder an der Kammerwand 4 der Prozesskammer 5.

Im Betrieb wird zunächst zum Aufbringen einer Pulverschicht der Träger 7 um eine Höhe abgesenkt, die der gewünschten Schichtdicke entspricht. Unter Verwendung des Beschichters 14 wird nun eine Schicht des pulverförmigen Aufbaumaterials 13 aufgetragen. Die Aufbringung erfolgt zumindest über den gesamten Querschnitt des herzustellenden Objekts 2, vorzugsweise über das gesamte Baufeld. Anschließend wird der Querschnitt des herzustellenden Objekts 2 von dem Laserstrahl 22 abgetastet, so dass das pulverförmige Aufbaumaterial 13 an diesen Stellen verfestigt wird. Diese Schritte werden solange wiederholt, bis das Objekt 2 fertiggestellt ist und dem Bauraum entnommen werden kann.

Während des Aufbaus des Objekts 2 wird der Gasstrom 33 über die Arbeitsebene 10 geleitet. Dieser Gasstrom 33 bewirkt, dass Rauch, Gase und/oder Dämpfe, die an der Pulveroberfläche gebildet werden, abtransportiert werden.

Durch die beschriebene Erweiterung des Querschnitts der Kanäle 42 in der Horizontalen von der Gaseintrittsseite 44 aus zu der Gasaustrittsseite 46 hin wird eine Auffächerung des Gasstroms 33 erzielt. Dadurch kann ein größerer Bereich durch den Gasstrom 33 überströmt werden, als es der Breite b2 des Teils des Körpers 41 entspricht, in dem die Austrittsöffnungen 47 angeordnet sind. Weiter können Randeffekte am Rand der laminaren Strömung verringert werden.

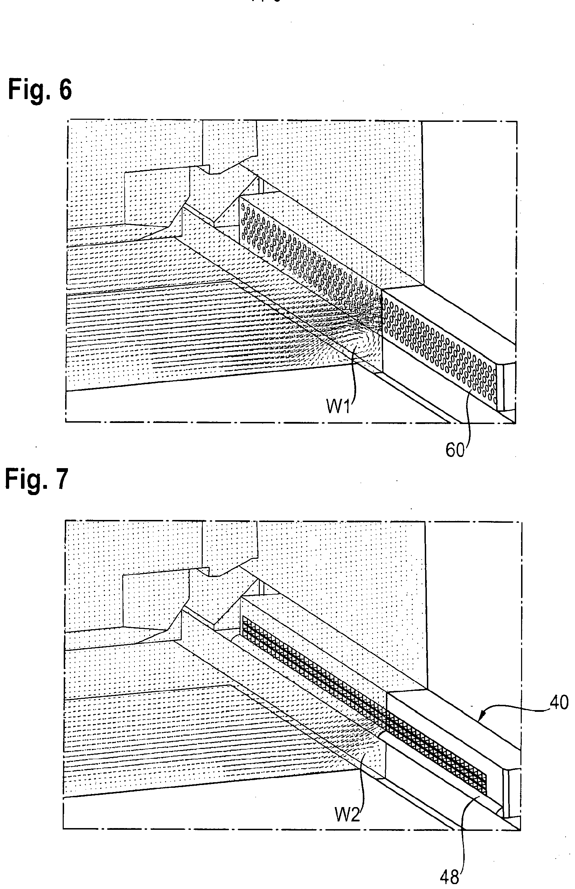

Fig. 6 und 7 zeigen jeweils Simulationsergebnisse einer Gasströmung bei Verwendung eines Lochblechs 60 als Vergleichsbeispiel bzw. des Düsenelements 40 der vorliegenden Ausführungsform als Gaseintrittsdüse.

Bei Verwendung des Lochblechs 60 erfolgt die Luftzufuhr zwischen zwei parallelen Platten, zwischen denen Verbindungsstege angeordnet sind, die jedoch keine durchgehend geschlossenen Kanäle zwischen der Eintrittsseite und der Austrittsseite bilden. Wie aus Fig. 6 ersichtlich, tritt bei Verwendung eines Lochblechs gemäß dem Stand der Technik unterhalb der unteren Lochreihe eine starke Verwirbelung W1 auf.

Fig. 7 zeigt dagegen, dass bei Verwendung des Düsenelements 40 die Verwirbelung W2 wesentlich kleiner ist und dass schon in einem kürzeren Abstand von den Austrittsöffnungen 47 ein laminarer Gasstrom erzielt wird.

Rauch, Gase und/oder Dämpfe, die an der Pulveroberfläche gebildet werden, können durch den Gasstrom 33 abtransportiert werden, ohne dass durch Verwirbelungen die Schicht des aufgebrachten Pulvers beeinträchtigt wird. Insbesondere führt das durch den Steg 48 und die Vorsprünge 49 der Wände zwischen den Kanälen 42 der unteren Reihe bewirkte Abwärtsrichten des Gasstroms 33 aus den unteren Austrittsöffnungen 47' dazu, eine auf der Gasaustrittsseite 46 entstehende Verwirbelung W2 des Gasstroms auf einen kleineren Bereich zu begrenzen und in einem kürzeren Abstand von dem Düsenelement 40 eine laminare Strömung auf der Arbeitsebene 10 zu erzielen.

Die durch das Düsenelement 40 verbesserte Laminarität des Gasstroms 33 bewirkt, dass beim Abtransport der an der Pulveroberfläche gebildeten Störprodukte keine Unregelmäßigkeiten oder Verwirbelungen entstehen, die die Belichtung stören und somit die Qualität des hergestellten Objekts 2 beeinträchtigen könnten. Daher haben die hergestellten Objekte 2 bessere Eigenschaften, z.B. weniger und kleinere Poren, vorhersehbare und geringere Abweichungen der mechanischen Eigenschaften usw.

Somit wird durch Verwendung des in dieser Ausführungsform beschriebenen Düsenelements 40 zur Erzeugung eines laminaren Gasstroms 33 die Wirkung erzielt, die Qualität der hergestellten Objekte 2 zu verbessern.

Um das Düsenelement 40 an verschiedene Anwendungsgebiete anzupassen (z.B. verschiedene Schichtdicken, verschiedene Korngrößen des verwendeten Pulvers), kann ein Teil der Eintrittsöffnungen 44 und/oder der Austrittsöffnungen 45 abgedeckt werden. Das kann manuell durch Abkleben mit einem Band oder Abdecken mit einem Deckel und/oder einem Schieber als Blendenvorrichtung geschehen. Ein zum Abdecken dienender Schieber kann aber auch motorisch bewegt werden, was wiederum durch die Steuereinheit 29 gesteuert werden kann. Durch ein solches partielles Abdecken der Eintrittsöffnungen 44 und/oder der Austrittsöffnungen 45 kann der Durchfluss des Gases gesteuert werden.

Auch wenn bei der oben beschriebenen Ausführungsform die Kanäle 42 einen rechteckigen Querschnitt haben und in Form einer Matrix in Reihen und Spalten angeordnet sind, ist die vorliegende Erfindung nicht darauf eingeschränkt. Die Querschnittsfläche der Kanäle 42 kann auch kreisförmig, dreieckig oder sechseckig sein oder einen beliebigen anderen gekrümmten und/oder polygonalen Rand aufweisen. Übereinander liegende Reihen von Kanälen können auch seitlich gegeneinander versetzt sein, nebeneinander liegende Reihen von Kanälen können in der Höhe gegeneinander versetzt sein, oder die Kanäle können in einer beliebigen anderen Form zueinander angeordnet sein.

Auch wenn bei der oben beschriebenen Ausführungsform die horizontale Breite der Kanäle 42 von der Gaseintrittsseite 44 des Düsenelements 40 aus zu der Gasaustrittsseite 40 hin allmählich zunimmt, kann die Breite auch konstant bleiben oder abnehmen. Auch die vertikale Höhe der Kanäle 42 kann von der Gaseintrittsseite 44 des Düsenelements 40 aus zu der Gasaustrittsseite 40 hin allmählich zunehmen, abnehmen oder konstant bleiben. Es müssen auch nicht alle Kanäle denselben Querschnitt und/oder denselben Abstand haben.

Die Wände zwischen den Kanälen müssen nicht fest sein, sondern können auch als Lamellen ausgebildet sein, die sich verschieben lassen.

Auch wenn die Kanäle bei der oben beschriebenen Ausführungsform geradlinig von der Gaseintrittsseite zu der Gasaustrittsseite verlaufen, ist die vorliegende Erfindung nicht darauf eingeschränkt. In einer zweiten Ausführungsform ist die Gaseintrittsseite gegenüber der Gasaustrittsseite um 90° geneigt.

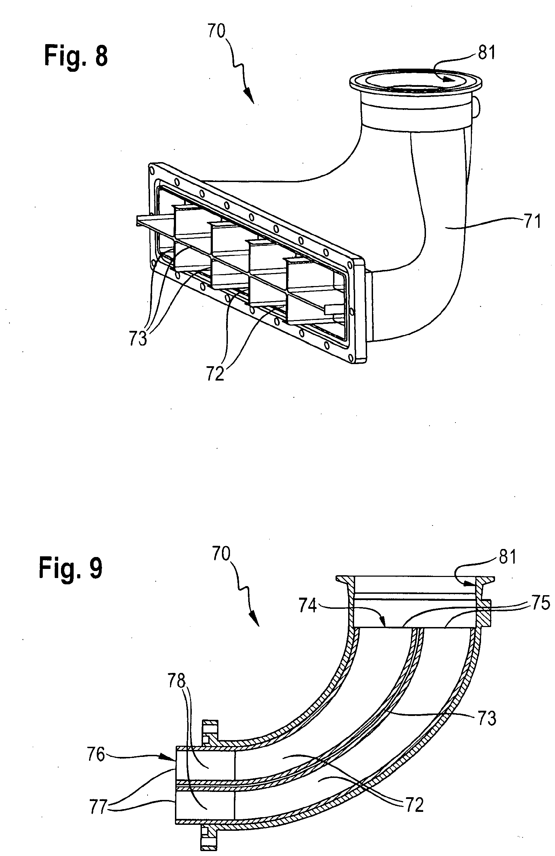

Fig. 8 zeigt eine perspektivische Ansicht eines Düsenelements 70 der zweiten Ausführungsform, und Fig. 9 zeigt eine Schnittansicht des in Fig. 8 gezeigten Düsenelements in dessen Mittelebene.

Das Düsenelement 70 umfasst einen Körper 71, der auf seiner Gaseintrittsseite 74 eine Öffnung 81 zum Anschluss einer Gaszufuhr aufweist.

Wie bei dem Düsenelement 40 verlaufen auch in dem Düsenelement 70 Kanäle 72, die durch Wände 73 voneinander getrennt sind, von der Gaseintrittsseite 74 zu der Gasaustrittsseite 76. Auf der Gaseintrittsseite 74 enden die Kanäle 72 in Eintrittsöffnungen 75, auf der Gasaustrittsseite 76 in Austrittsöffnungen 77. Anders als bei dem Düsenelement 40 sind die Kanäle jedoch gebogen, um die Richtung des von oben zugeführten Gases in die Horizontale umzulenken. An der Gasaustrittsseite 76 weist jeder Kanal 72 jedoch ein geradlinig horizontal verlaufendes Endstück 78 auf, dessen Länge so gewählt ist, dass sich in ihm eine laminare Strömung ausbildet und der Gasaustritt auf der Gasaustrittsseite 76 laminar erfolgt.

Weitere Merkmale und Abwandlungen der zweiten Ausführungsform sind dieselben wie bei der ersten Ausführungsform.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines Aufbaumaterials angewendet werden, bei denen eine Gasströmung, insbesondere eine Schutzgasströmung verwendet wird. Der Laser kann beispielsweise ein Gas- oder Festkörperlaser bzw. eine Laserdiode umfassen. Es kann auch ein Linienbelichter verwendet werden, der beispielsweise ein Array von Laserdioden enthält. Allgemein kann jede Einrichtung verwendet werden, mit der Energie selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Auch auf das selektive Maskensintern, bei dem eine ausgedehnte Lichtquelle und eine Maske verwendet werden, oder auf das Absorptions- bzw. Inhibitionssintern kann die Erfindung angewendet werden.

Anstelle des Einbringens von Energie kann das selektive Verfestigen des aufgetragenen Aufbaumaterials beispielsweise auch durch Aufbringen eines Klebers erfolgen. Allgemein bezieht sich die Erfindung auf das Herstellen eines Objekts mittels schichtweisen Auftragens und selektiven Verfestigens eines Aufbaumaterials unabhängig von der Art und Weise, in der das Aufbaumaterial verfestigt wird, beispielsweise auch auf das 3D-Drucken.

Als Gas wird vorzugsweise ein Schutzgas verwendet, das das mit dem Aufbaumaterial im Wesentlichen keine chemische Reaktion eingeht, je nach verwendetem Aufbaumaterial beispielsweise Stickstoff oder Argon.

Bei Verwendung eines Pulvers als Aufbaumaterial können verschiedene Arten von Pulver verwendet werden, insbesondere Metallpulver, Kunststoffpulver, Keramikpulver, Sand, gefüllte oder gemischte Pulver.

## Patentansprüche

1. Vorrichtung (1) zum Herstellen eines dreidimensionalen Objekts (2) durch schichtweises Verfestigen von Aufbaumaterial (13) an einem Querschnitt des herzustellenden Objekts (2) in einer jeweiligen Schicht entsprechenden Stellen mit
einem Träger (7, 8, 9), auf dem das Objekt (2) aufgebaut werden soll,
einer Beschichtungsvorrichtung (12-14) zum Aufbringen einer Schicht des Aufbaumaterials (13) auf den Träger (7, 8, 9) oder eine zuvor zumindest selektiv verfestigte Schicht des Aufbaumaterials (13) in einer Arbeitsebene (10),
einer Verfestigungsvorrichtung (20) zum selektiven Verfestigen des Aufbaumaterials (13) in der aufgebrachten Schicht und
einer Beströmungsvorrichtung (31, 32, 34, 35) zum Erzeugen eines Gasstroms auf einer von Träger (7, 8, 9) abgewandten Seite der aufgebrachten Schicht des Aufbaumaterials (13),
wobei der Gasstrom ausgebildet ist, die Arbeitsebene (10) zu überstreichen, und
wobei die Beströmungsvorrichtung ein Düsenelement (40; 70) zum Einleiten des Gasstroms in die Vorrichtung enthält, wobei das Düsenelement (40; 70) enthält:
einen Körper (41; 71) mit einer Gaseintrittsseite (44; 74) und einer Gasaustrittsseite (46; 76) und
eine Mehrzahl von Kanälen (42; 72), die den Körper (41; 71) von der Gaseintrittsseite (44; 74) zu der Gasaustrittsseite (46; 76) durchdringen, Eintrittsöffnungen (45; 75) auf der Gaseintrittsseite (44; 74) und Austrittsöffnungen (47; 77) auf der Gasaustrittsseite (46; 76) aufweisen und durch Wände (43; 73) voneinander getrennt sind, wobei die Gesamtquerschnittsfläche der Wände (43; 73) kleiner ist als die Gesamtquerschnittsfläche der Kanäle (42; 72),
wobei die Kanäle (42; 72) so ausgebildet und dimensioniert sind, dass sich in ihnen eine laminare Strömung an der Gasaustrittsseite (46; 76) bildet.

2. Vorrichtung gemäß Anspruch 1, bei der die Länge der Kanäle (42; 72) größer ist als die größte Abmessung ihrer auf der Gasaustrittsseite (46; 76) des Körpers (41; 71) liegenden Austrittsöffnungen (47; 77).

3. Vorrichtung gemäß Anspruch 1 oder 2, bei der eine Querschnittsfläche der Kanäle (42; 72) von der Gaseintrittsseite (44; 74) aus zu der Gasaustrittsseite (46; 76) hin allmählich zunimmt.

4. Vorrichtung gemäß einem der Ansprüche 1 bis 3, bei der über den Austrittsöffnungen (47) einer oder mehrerer Reihe(n) von Kanälen (42), die auf der der Arbeitsebene (10) zugewandten Seite des Düsenelements (40) liegen, ein Steg (48) angebracht ist, der von der Gasaustrittsseite (46) des Körpers (41) weg und in Richtung der Arbeitsebene (10) weist.

5. Vorrichtung gemäß Anspruch 4, bei der Wände (43) zwischen benachbarten Kanälen (42) einer unter dem Steg (48) positionierten, d. h. vom Steg (48) in Richtung der Arbeitsebene (10) angeordneten Reihe der Kanäle (42) jeweils einen sich weg von der Gasaustrittsseite (46) des Körpers (41) aus erstreckenden Vorsprung (49) aufweisen, der einen unteren Rand (50) der Austrittsöffnungen (47) der unter dem Steg (48) positionierten Reihe mit einem unteren Rand (51) des Stegs (48) verbindet, so dass schrägliegende Austrittsöffnungen (47') gebildet werden, die gegenüber den anderen Austrittsöffnungen (47) um einen Winkel (a) geneigt sind.

6. Vorrichtung gemäß Anspruch 5, bei der
der Winkel (a) größer gleich 45° ist, vorzugsweise größer gleich 55°, und/oder
der Winkel (a) kleiner gleich 75° ist, vorzugsweise kleiner gleich 65°,
wobei der Winkel (α) in weiter bevorzugter Weise 60° beträgt.

7. Vorrichtung gemäß einem der Ansprüche 1 bis 6, bei der zumindest ein Teil der Wände (43; 73) zwischen den Kanälen als verschiebbare Lamellen gebildet ist.

8. Vorrichtung gemäß einem der Ansprüche 1 bis 7, bei der mindestens ein Teil der Einlassöffnungen (45; 75) und/oder Auslassöffnungen (47; 77) durch eine Blendenvorrichtung abdeckbar sind.

9. Verfahren zum Herstellen eines dreidimensionalen Objekts (2) durch schichtweises Aufbringen und selektives Verfestigen eines Aufbaumaterials (13) mit den Schritten:
a) Aufbringen einer Schicht eines Aufbaumaterials (13) auf eine Arbeitsebene (10),
b) selektives Verfestigen der Schicht des Aufbaumaterials (13) an den dem Querschnitt des herzustellenden Objekts (2) entsprechenden Stellen und
c) Wiederholen der Schritte a) und b), bis das Objekt (2) fertiggestellt ist,
wobei während der Herstellung des Objekts ein Gasstrom (33) über die Arbeitsebene (10) geführt wird,
wobei der Gasstrom ausgebildet ist, die Arbeitsebene (10) zu überstreichen, und wobei
zum Erzeugen des Gasstroms (33) Gas durch ein Düsenelement (40; 70) geleitet wird,
wobei das Düsenelement (40; 70) enthält:
einen Körper (41; 71) mit einer Gaseintrittsseite (44; 74) und einer Gasaustrittsseite (46; 76) und
eine Mehrzahl von Kanälen (42; 72), die den Körper von der Gaseintrittsseite (44; 74) zu der Gasaustrittsseite (46; 76) durchdringen, Eintrittsöffnungen (45; 75) auf der Gaseintrittsseite (44; 74) und Austrittsöffnungen (47; 77) auf der Gasaustrittsseite (46; 76) aufweisen und durch Wände (43; 73) voneinander getrennt sind, wobei die Gesamtquerschnittsfläche der Wände (43; 73) kleiner ist als die Gesamtquerschnittsfläche der Kanäle (42; 72),
wobei die Kanäle (42; 72) so ausgebildet und dimensioniert sind, dass sich in ihnen eine laminare Strömung an der Gasaustrittsseite (46; 76) bildet.

10. Verwendung eines Düsenelements (40; 70) zum Einleiten eines Gasstroms in eine Vorrichtung (1) gemäß einem der Ansprüche 1 bis 8, wobei das Düsenelement (40; 70) aufweist:
einen Körper (41; 71) mit einer Gaseintrittsseite (44; 74) und einer Gasaustrittsseite (46; 76) und
eine Mehrzahl von Kanälen (42; 72), die den Körper von der Gaseintrittsseite (44; 74) zu der Gasaustrittsseite (46; 76) durchdringen, Eintrittsöffnungen (45; 75) auf der Gaseintrittsseite (44; 74) und Austrittsöffnungen (47; 77) auf der Gasaustrittsseite (46; 76) aufweisen und durch Wände (43; 73) voneinander getrennt sind, wobei die Gesamtquerschnittsfläche der Wände (43; 73) kleiner ist als die Gesamtquerschnittsfläche der Kanäle (42; 72),
wobei die Kanäle (42; 72) so ausgebildet und dimensioniert sind, dass sich in ihnen eine laminare Strömung an der Gasaustrittsseite (46; 76) bildet.

## Claims

1. A device (1) for producing a three-dimensional object (2) by solidifying, layer-by-layer, building material (13) at locations in a respective layer corresponding to the cross-section of the object (2) to be produced, the device comprising:
a support (7, 8, 9) on which the object (2) is to be constructed,
an application device (12 -14) for purposes of applying a layer of the building material (13) onto the support (7, 8, 9), or onto a previously, at least selectively, solidified layer of the building material (13) in a working plane (10),
a solidifying device (20) for purposes of selective solidification of the building material (13) in the applied layer and
a flow device (31, 32, 34, 35) for purposes of generating a gas flow onto a side of the applied layer of the building material (13) facing away from the support (7, 8, 9),
wherein the gas flow is configured to stream over the working plane (10), and
wherein the flow device contains a nozzle element (40; 70) for purposes of introducing the gas flow into the device,
wherein the nozzle element (40; 70) contains:
a body (41; 71) with a gas inlet side (44; 74) and a gas outlet side (46; 76), and
a plurality of channels (42; 72) which penetrate the body (41; 71) from the gas inlet side (44; 74) to the gas outlet side (46; 76), are provided with inlet openings (45; 75) on the gas inlet side (44; 74) and gas outlet openings (47; 77) on the gas outlet side (46; 76), and which are separated by walls (43; 73), wherein the total cross-sectional area of the walls (43; 73) is smaller than the total cross-sectional area of the channels (42; 72),
wherein the channels (42) are designed and dimensioned such that a laminar flow is formed in them at the gas outlet side (46; 76).

2. The device in accordance with claim 1, in which the length of the channels (42; 72) is greater than the largest dimension of their outlet openings (47; 77) located on the gas outlet side (46; 76) of the body (41; 71).

3. The device in accordance with claim 1 or 2, in which a cross-sectional area of the channels (42; 72) increases gradually from the gas inlet side (44; 74) to the gas outlet side (46; 76).

4. The device in accordance with one of the claims 1 to 3, in which, above the outlet openings (47) of one or a plurality of row(s) of channels (42) which are located on the side of the nozzle element (40) facing towards the working plane (10), a fin (48) is mounted which points away from the gas outlet side (46) of the body (41) and in the direction of the working plane (10).

5. The device in accordance with claim 4, in which walls (43) between adjacent channels (42) of a row of channels (42) positioned under the fin (48), i.e. arranged from the fin (48) in the direction of the working plane (10), have in each case a projection (49) extending out of and away from the gas outlet side (46) of the body (41), which connects a lower edge (50) of the outlet openings (47) of the row positioned under the fin (48) with a lower edge (51) of the fin (48), so that sloping outlet openings (47') are formed which are inclined relative to the other outlet openings (47) by an angle (α).

6. The device in accordance with claim 5, in which
the angle (α) is greater than or equal to 45°, preferably greater than or equal to 55°, and/or
the angle (α) is less than or equal to 75°, preferably less than or equal to 65°, wherein
in a more preferred manner the angle (α) is 60°.

7. The device in accordance with one of the claims 1 to 6, in which at least one part of the walls (43; 73) is formed as movable fins between the channels.

8. The device in accordance with one of the claims 1 to 7, in which at least one part of the inlet openings (45; 75) and/or outlet openings (47; 77) can be covered by a screening device.

9. A method for producing a three-dimensional object (2) by layer-wise applying and selectively solidifying of a building material (13) with the steps:
a) application of a layer of a building material (13) onto a working plane (10),
b) selective solidification of the layer of the building material (13) at the locations corresponding to the cross-section of the object (2) to be produced, and
c) repetition of steps a) and b), until the object (2) is completed, wherein
during the production of the object a gas flow (33) is guided over the working plane (10),
wherein the gas flow is configured to stream over the working plane (10), and wherein
for purposes of generating the gas flow (33) gas is guided through a nozzle element (40; 70),
wherein the nozzle element (40; 70) contains:
a body (41; 71) with a gas inlet side (44; 74) and a gas outlet side (46; 76), and
a plurality of channels (42; 72) which penetrate the body from the gas inlet side (44; 74) to the gas outlet side (46; 76), are provided with inlet openings (45; 75) on the gas inlet side (44; 74) and gas outlet openings (47; 77) on the gas outlet side (46; 76), and which are separated by walls (43; 73), wherein the total cross-sectional area of the walls (43; 73) is smaller than the total cross-sectional area of the channels (42; 72),
wherein the channels (42; 72) are designed and dimensioned such that a laminar flow is formed in them at the gas outlet side (46; 76).

10. A usage of a nozzle element (40; 70) for purposes of introducing a gas flow into a device (1) in accordance with one of the claims 1 to 8, wherein the nozzle element (40; 70) has:
a body (41; 71) with a gas inlet side (44; 74) and a gas outlet side (46; 76), and
a plurality of channels (42; 72) which penetrate the body from the gas inlet side (44; 74) to the gas outlet side (46; 76), are provided with inlet openings (45; 75) on the gas inlet side (44; 74) and gas outlet openings (47; 77) on the gas outlet side (46; 76), and which are separated by walls (43; 73), wherein the total cross-sectional area of the walls (43; 73) is smaller than the total cross-sectional area of the channels (42; 72),
wherein the channels (42; 72) are designed and dimensioned such that a laminar flow is formed in them at the gas outlet side (46; 76).

## Revendications

1. Dispositif (1) de fabrication d'un objet (2) tridimensionnel par solidification couche par couche d'un matériau de construction (13) à des endroits correspondant à une section transversale de l'objet (2) à fabriquer dans une couche respective avec
un support (7, 8, 9), sur lequel l'objet (2) vise à être construit,
un dispositif de revêtement (12-14) destiné à appliquer une couche du matériau de construction (13) sur le support (7, 8, 9) ou une couche préalablement solidifiée de manière au moins sélective du matériau de construction (13) dans un plan de travail (10),
un dispositif de solidification (20) pour la solidification sélective du matériau de construction (13) dans la couche appliquée et
un dispositif de production de flux (31, 32, 34, 35) destiné à produire un flux de gaz sur une face, opposée au support (7, 8, 9), de la couche appliquée du matériau de construction (13),
dans lequel le flux de gaz est conçu pour balayer le plan de travail (10), et
dans lequel le dispositif de production de flux contient un élément buse (40 ; 70) destiné à introduire le flux de gaz dans le dispositif,
dans lequel l'élément buse (40 ; 70) contient :
un corps (41 ; 71) avec un côté d'entrée de gaz (44 ; 74) et un côté de sortie de gaz (46 ; 76) et
une pluralité de canaux (42 ; 72), qui traversent le corps (41 ; 71) du côté d'entrée de gaz (44 ; 74) au côté de sortie de gaz (46 ; 76), présentent des ouvertures d'entrée (45 ; 75) sur le côté d'entrée de gaz (44 ; 74) et des ouvertures de sortie (47 ; 77) sur le côté de sortie de gaz (46 ; 76) et sont séparés les uns des autres par des parois (43 ; 73), dans lequel la surface de section transversale totale des parois (43 ; 73) est plus petite que la surface de section transversale totale des canaux (42 ; 72),
dans lequel les canaux (42 ; 72) sont réalisés et dimensionnés de sorte qu'un courant laminaire se forme dans ceux-ci sur le côté de sortie de gaz (46 ; 76).

2. Dispositif selon la revendication 1, où la longueur des canaux (42 ; 72) est plus grande que la plus grande dimension de leurs ouvertures de sortie (47 ; 77) situées sur le côté de sortie de gaz (46 ; 76) du corps (41 ; 71).

3. Dispositif selon la revendication 1 ou 2, où une surface de section transversale des canaux (42 ; 72) augmente progressivement à partir du côté d'entrée de gaz (44 ; 74) en direction du côté de sortie de gaz (46 ; 76).

4. Dispositif selon l'une quelconque des revendications 1 à 3, où un élément jointif (48), qui est orienté dans la direction opposée au côté de sortie de gaz (46) du corps (41) et en direction du plan de travail (10), est monté au-dessus des ouvertures de sortie (47) d'une ou plusieurs rangée(s) de canaux (42), qui se situent sur la face de l'élément buse (40) tournée vers le plan de travail (10).

5. Dispositif selon la revendication 4, où des parois (43) présentent entre des canaux (42) voisins d'une rangée des canaux (42) positionnée sous l'élément jointif (48), c'est-à-dire depuis l'élément jointif (48) en direction du plan de travail (10), respectivement une partie saillante (49), s'étendant à distance du côté de sortie de gaz (46) du corps (41), qui relie un bord inférieur (50) des ouvertures de sortie (47) de la rangée positionnée sous l'élément jointif (48) à un bord inférieur (51) de l'élément jointif (48), de sorte que des ouvertures de sortie (47') obliques sont formées, qui sont inclinées selon un angle (α) par rapport aux autres ouvertures de sortie (47).

6. Dispositif selon la revendication 5, où
l'angle (α) est supérieur ou égal à 45°, de préférence supérieur ou égal à 55°, et/ou
l'angle (α) est inférieur ou égal à 75°, de préférence inférieur ou égal à 65°,
dans lequel l'angle (α) atteint plus préférablement 60°.

7. Dispositif selon l'une quelconque des revendications 1 à 6, où
au moins une partie des parois (43 ; 73) entre les canaux est formée en tant que lamelles coulissantes.

8. Dispositif selon l'une quelconque des revendications 1 à 7, où
au moins une partie des ouverture d'entrée (45 ; 75) et/ou ouvertures de sortie (47 ; 77) peut être recouverte par un dispositif d'obturation.

9. Procédé de fabrication d'un objet (2) tridimensionnel par application couche par couche et solidification sélective d'un matériau de construction (13) avec les étapes :
a) d'application d'une couche d'un matériau de construction (13) sur un plan de travail (10),
b) de solidification sélective de la couche du matériau de construction (13) aux endroits correspondant à la section transversale de l'objet (2) à fabriquer et
c) de répétition des étapes a) et b), jusqu'à ce que l'objet (2) ait été achevé,
dans lequel un flux de gaz (33) est guidé au-dessus du plan de travail (10) pendant la fabrication de l'objet,
dans lequel le flux de gaz est conçu pour balayer le plan de travail (10), et dans lequel
pour produire le flux de gaz (33), du gaz est acheminé à travers un élément buse (40 ; 70),
dans lequel l'élément buse (40 ; 70) contient :
un corps (41 ; 71) avec un côté d'entrée de gaz (44 ; 74) et un côté de sortie de gaz (46 ; 76) et
une pluralité de canaux (42 ; 72), qui traversent le corps du côté d'entrée de gaz (44 ; 74) au côté de sortie de gaz (46 ; 76), présentent des ouvertures d'entrée (45 ; 75) sur le côté d'entrée de gaz (44 ; 74) et des ouvertures de sortie (47 ; 77) sur le côté de sortie de gaz (46 ; 76) et sont séparés les uns des autres par des parois (43 ; 73), dans lequel la surface de section transversale totale des parois (43 ; 73) est plus petite que la surface de section transversale totale des canaux (42 ; 72),
dans lequel les canaux (42 ; 72) sont réalisés et dimensionnés de sorte qu'un courant laminaire se forme dans ceux-ci sur le côté de sortie de gaz (46 ; 76).

10. Utilisation d'un élément buse (40 ; 70) pour introduire un flux de gaz dans un dispositif (1) selon l'une quelconque des revendications 1 à 8, dans laquelle l'élément buse (40 ; 70) présente :
un corps (41 ; 71) avec un côté d'entrée de gaz (44 ; 74) et un côté de sortie de gaz (46 ; 76) et
une pluralité de canaux (42 ; 72), qui traversent le corps du côté d'entrée de gaz (44 ; 74) au côté de sortie de gaz (46 ; 76), présentent des ouvertures d'entrée (45 ; 75) sur le côté d'entrée de gaz (44 ; 74) et des ouvertures de sortie (47 ; 77) sur le côté de sortie de gaz (46 ; 76) et sont séparés les uns des autres par des parois (43 ; 73), dans lequel la surface de section transversale totale des parois (43 ; 73) est plus petite que la surface de section transversale totale des canaux (42 ; 72),
dans lequel les canaux (42 ; 72) sont réalisés et dimensionnés de sorte qu'un courant laminaire se forme dans ceux-ci sur le côté de sortie de gaz (46 ; 76).
